# EUROPÄISCHE PATENTANMELDUNG

(11) **EP 1 086 809 A2**
(43) Veröffentlichungstag der Anmeldung: **28.03.2001**
(21) Anmeldenummer: 00890264.5
(22) Anmeldetag: 31.08.2000
(51) Int. Cl.: B32B 27/30, B65D 65/40

(54) **Aromadicht wiederverschliessbare Packung für trockene Packungsgüter**

(30) Priorität: 22.09.1999 AT 161899
(71) Anmelder: TEICH Aktiengesellschaft, 3200 Weinburg (AT)
(72) Erfinder: Haschke, Heinz, Dr., 2542 Kottingbrunn (AT); Nekula, Lambert, 3202 Hofstetten (AT)
(74) Vertreter: Dungler, Karin

(57) **Zusammenfassung**

Die Erfindung betrifft eine Packung mit einer Hülle aus einem flächigen, faltbaren Verpackungsmaterial in Form eines Laminates, von welchem zumindestens zwei Randzonen einen Verbindungsbereich zur Ausbildung der Hülle darstellen. Erfindungsgemäß besteht das Laminat aus einer kaltwasserlöslichen Folie und einer wasserunlöslichen Trägerfolie, wobei die kaltwasserlösliche Folie im wesentlichen aus Polyvinylalkoholen mit Verseifungsgraden von 83 bis 95 Mol.-% oder aus Acetalen von Polyvinylalkoholen mit Verseifungsgraden zur Freisetzung ihrer OH-Gruppen aus Polyvinylacetat von 80 bis 98 Mol.-% acetalisiert mit Stärke zu einem Anteil an acetalisch anreagierter Stärke von bis zu 50 Gew.-% besteht. Zur Ausbildung der Packungshülle werden die Randzonen der Laminatlagen derart angeordnet, dass die kalt-wasserlöslichen Folien übereinander liegen, so dass durch Verschweißen ein oder mehrere Verbindungsbereiche zum Verschließen der Packung entstehen. Nach dem Öffnen ist die Packung durch Befeuchten der kaltwasserlöslichen Folien in den jeweiligen Randzonen wiederverschließbar.

## Beschreibung

Die Erfindung betrifft eine aromadicht wiederverschließbare Packung sowie ein Verfahren zu deren Herstellung.

Wiederverschließbare Packungen gewinnen immer mehr an Bedeutung aufgrund zweier Entwicklungen: Erstens steigt das Interesse der Konsumenten an "Chemie-freien" Produkten. Das hat dazu geführt, dass Lebens- und Genussmittel sowie auch andere Verbrauchsgüter in immer geringeren Mengen Stabilisatoren zugesetzt werden, die bislang das Packungsgut vor dem Befall durch Bakterien, Pilzen oder gegen Veränderungen durch Oxidation durch Luftsauerstoff geschützt haben.

Zweitens führt die sozialpolitische Entwicklung des systematischen Ansteigens des Prozentsatzes an sogenannten "Single-Haushalten" in der Bevölkerung dazu, dass Packungen zwar geöffnet, deren Inhalt jedoch nicht sofort gänzlich verwendet wird, so dass die Restmengen oftmals für längere Zeit aufbewahrt und erst in mehrmaligen Teilentnahmen verbraucht werden.

Es steigt daher der Bedarf an einer Packung, welche nicht nur den Packungsinhalt bis zum Verkauf des Produktes schützt und deren Schutzwirkung mit der ersten Produkt-Entnahme wegfällt, sondern das Material dieser Packung soll auch nach dem Öffnen über eine möglichst hohe Barrierewirkung der Packung gegenüber Luftsauerstoff, Bakterien- und Pilzbefall aber auch gegenüber Luftfeuchtigkeit verfügen.

Im übrigen ist es höchst nachteilig, wenn Backwaren ihr Aroma und ihre Knusprigkeit allein dadurch verlieren, dass sie bei längerer Lagerung unter nicht ausreichend gehindertem Luftzutritt, Luftfeuchtigkeit aufnehmen.

Es wurden daher bereits verschiedenste Systeme zur Wiederverschließbarkeit von Packungen vorgeschlagen. Die einfachsten Systeme sind rein mechanischer Natur, wobei durch geeignete Ausbildung der zu öffnenden Verpackungskanten mit Falzen - analog zu Reißverschlüssen - eine Wiederverschließbarkeit der Packung ermöglicht wird. Allerdings lässt die Dichtheit bzw. Barrierewirkung solcher Packungen sehr zu wünschen übrig. Dies wird dann deutlich, wenn man die Barrierewirkung bzw. Permeabilität üblicher Verpackungsfolien mit Folien vergleicht, welche durch einen derartigen Falzverschluß unterbrochen sind. Beispielsweise beträgt die Permeabilität einer Polyethylenfolie gegenüber Wasserdampf üblicherweise rund 1 g/m².d (bei 25°C und 85% relative Luftfeuchtigkeit); die Wasserdampfdurchlässigkeit von Ethylen-Vinylalkohol-Copolymerisat-Folien (EVOH-Folien) liegt vergleichsweise bei rund 10 g/m².d. Demgegenüber steigt die Wasserdampfdurchlässigkeit an Falzverschlüssen um Größenordnungen auf ca. 100 - 1000 g/m².d bzw. sogar auf die für wasserübliche Durchlässigkeit an. Analoges gilt für die Sauerstoff-Durchlässigkeit und für die Durchlässigkeit gasförmiger Aroma-Bestandteile.

Um hier Abhilfe zu schaffen, wurden Packungen mit Klebeverschlüssen vorgeschlagen. Dabei wird nach dem ersten Öffnen der Packung ein bis dahin abgedeckter Streifen freigegeben, welcher mit einem sogenannten "Pressure Sensitive Adhesive" (PSA), also einem druckempfindlichen Kleber versehen ist. Nach dem Öffnen kann die Packung durch Andrücken des Klebestreifens über den Öffnungsbereich wiederverschlossen werden.

Nachteil derartiger PSA-Systeme ist es jedoch, dass die dauerklebende PSA-Oberfläche höchst empfindlich gegenüber Verunreinigungen wie Staub und Krümel aus dem Packungsgut sind und daher an den Stellen, wo derartige Verunreinigungen auftreten, kaum mehr auf der Gegenseite haften und damit auch kaum mehr eine Verschluss-Dichtigkeit nach dem Wiederverschließen geben.

Es wurde daher vorgeschlagen, anstelle von Dauerklebern solche Kleber zu verwenden, die erst aktiviert werden müssen. Dabei scheiden jedoch jene Kleber aus, die durch toxische und brennbare Lösungsmittel wie Benzin oder Aceton aktiviert werden müssen. Somit kommen praktisch nur mit Wasser aktivierbare Kleber in Frage. Davon ist die einfache Gummierung - wie von Briefmarken bekannt - ein schon sehr altes System mit dem Nachteil, dass die Haftung von Gummierungen nicht sehr hoch ist. Der Verschluß der Packung kann daher bereits bei relativ geringer mechanischer Belastung aufgehen, so dass das Packungsgut ausrinnt oder aber ungenießbar, beispielsweise durch Eindringen von Verunreingungen, wird.

Verbesserungen auf dem Gebiet der Wasser-aktivierbaren Kleber richteten sich somit auf die Erhöhung der Klebekraft bei gleichzeitiger Verminderung der Blockungsneigung, d.h. Verminderung der Rest-Klebewirkung im unaktivierten Zustand, was wiederum zu Problemen hinsichtlich extrem leichter Verunreinigbarkeit, wie bei PSA-Klebern bekannt, führt.

So beschreibt die US-A-3,574,153 partiell hydrolysierte Polyvinylacetate mit Verseifungsraden von maximal 85 Mol-% als wiederbefeuchtbare Heiß-Schmelzkleber, welche unter Umständen auch als Wasser-aktivierbare Kleber für wiederverschließbare Packungen infrage kämen. Allerdings ist man von solchen Systemen wegen ihrer Blockungsneigung wieder abgekommen, so dass gemäß der US-A-3,574,153 die Verwendung von wesentlich hydrophoberen Polyvinylalkohol/Polyvinylacetat-Gemischen mit Verseifungsgraden von maximal 60 Mol-% vorgeschlagen wird. Die geringere Adhäsionswirkung dieser Systeme im aktivierten Zustand wird durch Beimischen von Tierleim - analog zur klassischen Gummierung - oder von Celluloseethern, von Vinyl-Methyl-Ether-Maleinsäureanhydrid-Copolymeren oder von Polyacrylsäuren kompensiert.

Abgesehen davon, daß solche Systeme wieder nur einen unbefriedigenden Kompromiss zwischen Haftungsfestigkeit und Blockungsneigung darstellen, bedeutet der relativ geringe Verseifungsgrad der dafür notwendigen Polyvinylacetate, daß solche Systeme massiv dazu neigen, Essigsäure aus den reichlich vorhandenen Acetatgruppen abzuspalten, so daß der Geschmack und Geruch des Packungsgutes massiv beeinträchtigt werden.

Ein weiterer Lösungsansatz wird in der GB-A-1,065,714 beschrieben, worin Mischungen von Wasser-aktivierbaren Klebern mit Wasser-unlöslichen organischen Polymeren vorgeschlagen werden. Dabei wirkt das Wasser-unlösliche organische Polymere als Anti-Blockungsmittel und wird in den Wasser-dispergierbaren Kleber durch Dispergieren eingebracht. Die Nachteile dieser Systeme sind vorhersehbar:

Die zwar zufriedenstellende Klebefestigkeit geht einher mit einer Blockungsneigung und damit einer Desaktivierung der Kleberkante durch Verunreinigung mit Staub und Krümel des Packungsgutes. Die Reduzierung der Blockungsneigung verringert nahezu ganz die Klebefestigkeit.

Ferner werden Wasser-aktivierbare Kleber auf Basis von Polyvinylalkohol oder von Stärke gemäß der US-A-4,910,048 vorgeschlagen. Dabei wird das Klebergemisch punktförmig auf die zu wiederverschließende vorgesehene Kante aufgebracht. Die Zwischenräume zwischen den Kleberpunkten führen jedoch zum massiven Durchtritt von Wasserdampf, Luftsauerstoff und gasförmigen Aromastoffen oder auch von Bakterien oder Pilzsporen. Die aktivierten Kleberzonen stellen daher ebenso einen unbefriedigenden Kompromiss zwischen Haftungsfestigkeit nach Aktivierung und Blockungsneigung im unaktivierten Zustand, wie bei den bekannten Systemen, dar.

Wünschenswert wäre daher ein System, welches nicht nur wesentlich bessere Haftungseigenschaften als die vorbekannten Adhäsions-Klebeverbindungen, sondern auch noch bessere Haftungseigenschaften als dies mit Cohäsions-Klebungen möglich wäre, aufweist. Dies wäre nämlich ein wesentliches Erfordernis bei der Bereitstellung von wiederverschließbaren Packungen, wobei zusätzlich eine gewisse Toleranz gegenüber der Verunreinigung innerhalb der wiederverschließbaren Kleberzonen gegeben ist.

Wünschenswert wäre außerdem, dass ein solches System praktisch keine Blockungsneigung zeigt, bzw. eine solche durch Antiblockmittel reduziert oder verhindert werden kann, ohne dass dadurch wie bei herkömmlichen Systemen die Wiederverschließbarkeit allzu stark leidet.

Diese Erfordernisse erfüllt die erfindungsgemäße, aromadichte, wiederverschließbare Packung, wie sie gemäß Hauptanspruch gekennzeichnet ist. Das Wiederverschließen läßt sich erfindungsgemäß anstelle von bekannten Klebeverbindungen durch einen Kaltverschweißungsprozess zwischen zwei chemisch gleichartigen Schichten realisieren. Somit ist die Wiederverschließbarkeit nicht wie bei bekannten Packungen nur in einem dünnen Randbereich gegeben, sondern über den gesamten Packungsquerschnitt. Dadurch ergibt sich auch die Möglichkeit, dass bei jedem Wiederverschließen durch Abschneiden der jeweiligen Verbindungsbereiche ein weiterer Verbindungsbereich ausgebildet wird. Die Wiederverschließbarkeit ist daher durch eventuelle Verunreinigungen nicht beeinträchtigt.

Der erfindungsgemäß angewandte Kaltverschweißungs-Vorgang unterscheidet sich ganz allgemein vom üblichen Klebevorgang dadurch, dass beim Klebevorgang bloß polare funktionelle Gruppen aktiviert werden, welche elektrostatisch und durch ihre große Dichte eine gewisse Verbindung zur anderen Klebekomponente herstellen. Man spricht in diesen Fällen von Adhäsionsklebung, in denen zwei ungleiche Oberflächen miteinander verbunden werden, hingegen von Cohäsionsklebung, wenn zwei gleiche Oberflächen miteinander verbunden werden. Bei einem Verschweißungs-Vorgang werden nunmehr die beiden Teile oder Oberflächen so verflüssigt, dass Teile davon in die jeweils andere Oberfläche einfließen oder eindiffundieren können und dadurch nach Wiederverfestigung keine trennende Grenzschicht, wie im Falle einer Kleberschicht existiert, sondern ein über den gesamten Querschnitt der Verbindung einheitlicher Stoff. Bei einem Warm-Verschweißungs-Prozess erfolgt die Verbindung durch eine Mobilisierung der Moleküle in den Grenzschichten der beiden zu verbindenden Teile durch Aufschmelzen und dadurch ermöglichtes Ineinanderdiffundieren der Moleküle beider Teile in die jeweilig gegenüberliegende Schicht mit nachfolgender Wiederverfestigung durch Erstarren beim Abkühlen unter Ausbildung einer einheitlichen Phase an der Schweißnaht, ohne dass dort eine Trennschicht übrigbleibt, wie das bei einer Verklebung der Fall wäre.

Beim Kalt-Verschweißungs-Prozess erfolgt die Verbindung durch Mobilisierung der (Polymer)-Moleküle in den Grenzschichten der beiden zu verbindenden Teile durch Anquellen bis Anlösung durch einen geeigneten Weichmacher und dadurch ermöglichtes Ineinanderdiffundieren der (Polymer-)-Moleküle beider Teile in die jeweilig gegenüberliegende Schicht mit nachfolgender Wiederverfestigung durch weiteres Eindiffundieren des Weichmachers ins Innere der Polymerphasen, so dass an der Verbindungsstelle die Weichmacherkonzentration unter den Grenzwert, bei dem die (Polymer-)-Molekül-Mobilisierung möglich ist, absinkt. Ebenfalls - wie beim Warm-Verschweißungs-Prozess - erfolgt die Ausbildung einer einheitlichen Phase an der Schweißnaht, ohne dass dort eine Trennschicht entsteht.

Bei der vorliegenden Erfindung wird die Kalt-Verschweißung dadurch erreicht, dass spezielle kaltwasserlösliche Folien in spezieller Mindestdicke sowie Wasser als Weichmacher eingesetzt werden. Bei der Aktivierung der Kalt-Verschweißungs-Verbindung durch Wasser führt die zur Aktivierung benötigte Wassermenge dazu, dass an der Oberfläche der Folie die Polymermoleküle so mobilisiert werden, dass beim Kontakt mit der gleichartigen, im Verbindungsbereich gegenüberliegenden Folie der Kalt-Verschweißungs-Prozess einsetzen kann und das Aktivierungswasser auch nicht weggetrocknet werden muss um eine feste Verbindung herzustellen, sondern es wird das Aktivierungswasser vollständig in beiden Verpackungsmateriallagen absorbiert.

Der Kaltverschweißungs-Prozess als physikalischer Vorgang für die Herstellung einer Verbindung erlaubt daher im Gegensatz zu einer Verklebung durch Klebemittel die Erreichung wesentlich höherer Haftfestigkeiten und damit auch den Einbau von Antiblockmitteln, so dass - ausgehend von dem höheren Niveau der Kaltverschweißungs-Festigkeiten im Vergleich zu Verklebungsfestigkeiten - selbst bei deutlichem Einsatz von Antiblockmitteln die Endfestigkeit der Haftnaht immer noch höher als bei Antiblockmittel-freien Verklebungen liegt.

Die erfindungsgemäß für die Herstellung der Packungen einzusetzenden Laminate bestehen aus einer Schicht eines wasserunlöslichen Trägermaterials wie Kunststoff-Folien aus Polyethylen, Polypropylen oder Polyethylenterephthalat (PET) sowie Aluminium-Verbunde daraus. Vorzugsweise werden als wasserunlösliche Trägermaterialien Papier oder Verbunde aus Papier und den vorgenannten Kunststoff-Folien, unter anderem unter Anwendung von Aluminium eingesetzt. Ferner werden beschichtete Papiere, als Trägermaterial für die spezielle kaltwasserlösliche Folie eingesetzt, welche für den Kaltverschweißungsprozeß mit der gleichartigen Seite eines analogen Laminates geeignet ist, auflaminiert wird.

Als erfindungsgemäß einzusetzende kaltwasserlöslichen Folien, bei deren Aktivierung durch Wasser auch polare und stark hydrophile funktionelle Gruppen ausgebildet werden, welche geeignet sind, nicht nur elektrostatische Verbindungskräfte aufzubauen, sondern auch solche durch sogenannte Wasserstoffbrücken, können insbesondere Laminate mit Papier als Trägerschicht, verwendet werden, da Papier als Cellulose-Produkt ebenso OH-Gruppen in seiner chemischen Struktur aufweist. Dies hat den Vorteil, dass diese Laminate sogar ganz ohne Haftvermittler herstellbar sind, wobei die Papierbahn einfach mit Wasser leicht befeuchtet und die kaltwasserlösliche Spezialfolie dagegengepresst wird.

Als kaltwasserlösliche Spezialfolien für die Herstellung der Laminate der erfindungsgemäßen Packung kommen Polyvinylalkohol-Folien, welche durch Schmelzextrusion von Preblends in Granulatform bestehend aus Polyvinylalkoholen mit Verseifungsgraden von 83 bis 95 Mol-% (bezogen auf das zur Verseifung eingesetzte Polyvinylacetat), neben 5 bis 15 Gew.-% Glycerin als Weichmacher, 3 bis 12 Gew.-% Wasser als Co-Weichmacher, 0,1 bis 1 Gew.-% Antiblockmittel, sowie 0 bis 0,3 Gew.-% Stearinsäure herstellbar sind, in Frage. Bevorzugt sind Polyvinylalkohole mit Verseifungsgraden zwischen 85 und 90 Mol-%.

Diese Mischungen können so hergestellt werden, dass durch Eintragen von Friktionsenergie eine oberflächliche Anschmelzung der Polyvinylalkohol-Granulate erfolgt und durch Benetzen der angeschmolzenen Granulat-Partikel-Aussenzonen durch die festen Additive unter der mechanischen Wirkung des Mischers entstehen, wobei die Masse während fortgesetztem Mischen nach Durchlaufen eines Maximums an Friktions-Energieaufnahme wieder zu einem rieselfähigen Granulat zerfällt.

Besonders bevorzugt werden für die Herstellung der Laminate für die erfindungsgemäße Packung kaltwasserlösliche Spezialfolien eingesetzt, welche durch Schmelzextrusion von Granulaten bestehend aus Acetalen von Polyvinylalkohol mit Stärke oder Stärkederivaten wie sie in US-A-5,914,368 beschrieben werden, herstellbar sind. Bei den erfindungsgemäßen Packungen hingegen kommen solche Acetale infrage, bei denen zu deren Herstellung von Polyvinylalkoholen mit Verseifungsgraden von 80 bis 98 Mol.-% ausgegangen wird, und der Anteil an acetalisch anreagierter Stärke bzw. Stärkederivat bis zu 50 Gew.-% (bezogen auf das Gesamtgewicht Polyvinylalkohol plus Stärke bzw. Stärkederivat) beträgt (im folgenden kurz PVACL genannt). In der Regel entstehen bei der Acetalisierungsreaktion unter der Acetatabspaltenden Wirkung der sauren Acetalisierungskatalysatoren aus den genannten Polyvinylalkohol-Einsatzstoffen schließlich Acetale, in denen die Polyvinylalkohol-Komponente Verseifungsgrade von 90 bis 98 Mol.-% aufweist.

Bevorzugt sind die Polyvinylalkohol-Stärke-Acetale mit einem Stärkeanteil von mehr als 30 Gew.-%, da bei diesen durch die bereits recht signifikante Acetalisierung des Polyvinylalkohols durch die Stärkemoleküle die Wasserstoffbrücken-Bildungstendenz an den freien OH-Gruppen des Polyvinylalkohols so stark unterdrückt wird, wie es notwendig ist, damit der Polyvinylalkohol nicht durch zu starke intramolekulare Verknäuelung nur mehr heißwasserlöslich wird. Dies bringt den zusätzlichen Vorteil, dass im Gegensatz zu nicht acetalisierten, herkömmlichen kaltwasserlöslichen Polyvinylalkoholen, bei welchen für diese OH-Wasserstoffbrückenbildungs-unterdrückende Wirkung ein etwas höherer Rest-Acetat-Gehalt (über einen etwas geringeren Verseifungsgrad) notwendig ist, wodurch der Nachteil entsteht, dass solche Folien zu einer höheren, den Geruch des Pakkungsgutes verderbenden Essigsäure-Abspaltung neigen, diese OH-Wasserstoffbrückenbildungs-blockierende Wirkung und damit die Kaltwasserlöslichkeit der Spezialfolien durch die anacetalisierten Stärke- bzw. Stärkederivat-Moleküle übernommen werden.

Bei den Polyvinylalkohol-Preblends sind solche mit Glycerin-Weichmacheranteilen von 7 bis 12 Gew-% und von Co-Weichmacher-Anteilen, das sind Wasser-Anteilen von 5 bis 9 Gew-% (inklusive des Wassergehalts, den der reine Polyvinylalkohol bereits mitbringt) bevorzugt.

Als Antiblockmittel kommen pulverförmige, wasserunlösliche, mit den kaltwasserlöslichen Folien nicht mischbare Produkte, wie PVC-Pulver oder vorzugsweise fein gemahlene mineralische Stoffe, wie SiO₂ oder Mg(OH)₂mit mittleren Korngrößen unter 10 µm, infrage. Bevorzugt sind mittlere Korngrößen unter 7µm. Besonders bevorzugt ist als Antiblockmittel aus der Gasphase gefälltes SiO₂ wie das Handelsprodukt AEROSIL der Firma DEGUSSA davon, insbesondere die Type R972.

Als Polyvinylalkohole sind sowohl für die Herstellung der kaltwasserlöslichen PVA-Folien aus Preblends als auch für die Herstellung von PVACL-Folien aus Polyvinylalkohol-Stärke/Stärkederivat-Acetalen Verseifungsprodukte von Polyvinylacetat mit den für den jeweiligen Einsatzzweck vorstehend angegebenen Verseifungsgraden und mit Werten für das Molekulargewicht (Gewichtsmittel) von 30.000 bis 200.000 geeignet. Besonders bevorzugt sind Polyvinylalkohole mit Molekulargewichtswerten von 50.000 bis 100.000.

Als Stärke bzw. Stärkederivate für die Herstellung der Polyvinylalkohol-Acetale kommen native Stärkeprodukte wie native Kartoffel-, Mais- oder Tapioka-Stärke oder deren Ethoxylierungs- oder Propoxylierungsprodukte mit maximal 15 Mol% Alkoxylierung pro C₆-Einheit der Stärkemoleküle infrage.

Die Dicke der einzusetzenden kaltwasserlöslichen Folien liegt vorzugsweise zwischen 10 und 50 µm, besonders bevorzugt sind Folienstärken zwischen 20 und 40 µm.

Die erfindungsgemäße Packung, insbesondere in Form eines Schlauchbeutels, wird derart gebildet, dass jeweils zwei Laminatstreifen über Transportrollen einander so zugeführt werden, dass sie jeweils die kaltwasserlöslichen Folienschichten berührend, aneinander zu liegen kommen. Der Verbindungsbereich zwischen diesen beiden Laminatstreifen zur Herstellung der Packung wird durch Warm- oder Kaltver-schweißen entlang der gewünschten Verbindungskanten hergestellt. Der Warmverschweißungsprozess erfolgt vorzugsweise durch beheizte Rollen mit einer Temperatur von 135 bis 155 °C. Der alternative Kaltverschweißungsprozess erfolgt durch einfaches Befeuchten mit Wasser an den zu bildenden Kantenverbindungen über eine Breite von 2 bis 10 mm, vorzugsweise von 3 bis 5 mm, mit nachfolgendem Verpressen, beispielsweise durch Anpressrollen. Dadurch wird die sogenannte Längsnahtfinne als Verbindungsnaht zwischen den beiden Laminatstreifen ausgebildet.

Sollen andere Verpackungsarten als Schlauchbeutel hergestellt werden, so kann der Vorgang mit weiteren Laminatstreifen wiederholt werden.

Um einzelne Packungen herstellen zu können, werden jeweils zwei Quernahtfinnen - eine davon nach dem Befüllen mit dem Packgut - entweder durch Warm-Querabschweißen oder durch Abschneiden mit anschließendem Kalt-Querabschweißen durch Befeuchten mit Wasser unter entsprechendem Anpreßdruck ausgebildet.

In die erfindungsgemäße Packung kann vorzugsweise trockenes Pakkungsgut wie beispielsweise Kaffee, Kakaopulver, Milchpulver, Mehl, Kartoffelpüree-Pulver, Puddingpulver, Zucker, Tabak, Reis aber auch Fertigprodukte wie Kartoffelchips, Instant-Suppenpulver, Gewürzpulver oder Backwaren abgepackt werden.

Durch den Abpackprozess ist das trockene Packungsgut gasdicht verpackt. Die Packungen können - wie an sich bekannt - durch Aufschneiden - vorzugsweise parallel zur Quernahtfinne oder an einer Ecke - geöffnet werden. Nach Entnahme des Packungsgutes oder einer Teilmenge davon kann die Packung wieder gasdicht verschlossen werden. Dabei bedeutet gasdicht, dass die Packung bis auf eine Gas-Permeabilität, welche größenordnungsmäßig jener der Originalpackung entspricht, wiederverschlossen werden kann. Das Wiederverschließen erfolgt durch Befeuchten an den Randbereichen vorzugsweise nur einer, das heißt der oberen oder der unteren Verpackungsmateriallage, welche durch das Aufschneiden entstanden ist, und durch anschließendes Aneinanderdrücken. Dadurch kommen die kaltwasserlöslichen Folienschichten wieder miteinander in Verbindung.

Der Öffnungs- und Wiederverschließvorgang ist beliebig oft wiederholbar und zwar so lange, bis von der vorgenannten kaltwasserlöslichen Folienschicht des Laminats, welche über den Rand des Pakkungsgutes hinausragt, nichts mehr vorhanden ist.

Selbst für den Fall, dass durch ungeschicktes Hantieren ein bereits durch Befeuchten aktivierter und für das Wiederverschließen vorgesehener Laminatstreifen mit Packungsgut so stark verunreinigt wird, dass nicht mehr damit zu rechnen ist, dass diese Verunreinigungsmenge von der Dicke der kaltwasserlöslichen Folie porenfrei umhüllt wird, kann durch Abschneiden dieses verunreinigten Streifens und Aktivierung einer weiteren nach innen liegenden Zone ein neuer, sauberer Streifen zum Wiederverschließen aktiviert werden.

Die Erfindung soll durch nachstehende Beispiele näher erläutert werden.

### Beispiel 1:

Durch einfaches Befeuchten einer Papierbahn mit einer halb im Wasserbad laufenden, glatten Walze und Zusammenlaufenlassen dieser Papierbahn auf ihrer befeuchteten Seite mit einer weiteren Bahn aus 25 µm dicker PVA-Folie und Zusammenpressen beider Bahnen durch auf etwa 50 °C erwärmte Anpresswalzen wird ein Laminat hergestellt. Das dazu verwendete Papier ist an der Aussenseite, das ist jene Seite, die für die Laminatherstellung nicht befeuchtet wurde, mit einem Acrylatlack lackiert und anschließend bedruckt worden. Das Laminat weist insgesamt eine Stärke von etwa 90 g/m² auf.

Zuvor wird für die Herstellung des Laminats eine PVA-Folie durch Blasextrusion hergestellt. Dafür wird eine Mischung aus einem Preblend auf Polyvinyl-Alkoholbasis in Granulatform mit einem Verseifungsgrad von 88 Mol-% und einem mittleren Molekulargewicht von 67.000, 5 Gew-% an Zusatzwasser bezogen auf die Einsatzmenge an handelsüblichem Polyvinylalkohol-Granulat, 8 Gew-% Glycerin, 0,5 Gew-% Aerosil und 0,03 Gew-% Stearinsäure eingesetzt. Anschließend werden die Komponenten in einem PAPENMEIER-ESK80 Mischer dem Preblending-Prozess unterworfen, wobei nach 3 Minuten Mischzeit der Friktionsenergie-Aufnahmeanstieg einsetzt, nach weiteren 5 Minuten das Friktionsenergie-Aufnahmemaximum erreicht ist und das zuvor Knetmassen-artige Produkt im Mischer von selbst wieder zu Granulat zerfällt. Nach weiteren 9 Minuten wird das Temperaturmaximum von 85°C erreicht, ab welchem das Produkt abgekühlt und zum Austrag ausgerührt wird. Die Blasextrusion wird in an sich bekannter Weise, wie für die Polyvinylalkohol-Extrusion üblich, durchgeführt. Dabei beträgt die Maximaltemperatur des Schmelzextruder-Werkzeugs etwa 220°C. Auf diese Weise wird eine 25µm dicke Folie extrudiert.

Je zwei 14 cm breite Bahnen des wie vorstehend beschrieben hergestellten Laminates werden mit der Polyvinylalkohol-Schicht zueinander durch eine Schlauchbeutel-Schweißmaschine laufen gelassen, wobei entlang beider Längskanten der Folien mittels beheizter Anpressrollen eine ca. 15 mm breite Warm-Verschweißung mit anschließender Kantenbesäumung (je 5mm auf beiden Längskanten) zu einem aufrollbaren, beliebig langen Schlauch erzeugt wird. Der so hergestellte Schlauch wird in einem separaten Arbeitsgang auf einer Schlauchbeutel-Abpackmaschine zum Verpacken von Kaffeebohnen verwendet, wobei immer Portionsbeutel mit 23 cm Länge abgepackt und durch Warm-Querabschweißung verschlossen werden.

Die Packungen sind alle gasdicht: Permeabilitätsmessungen zeigen bei 25 °C Wasserdampf-Permeabilitätswerte der Gesamtverpackung von 7 g/m².d. Die Schlauchbeutelpackungen sind durch Aufschneiden mit einer Schere entlang der Querkante leicht zu öffnen und können nach Entnahme einer Teilmenge der Kaffeebohnen, durch Befeuchten der geöffneten Innenkante mit Leitungswasser anschließend durch Zusammendrücken wieder gasdicht verschlossen werden.

Permeabilitätsmessungen an derartig wiederverschlossenen Beuteln ergeben bei 25 °C Wasserdampf-Permeabilitätswerte der Gesamtverpakkung von 10 g/m².d.

Der Öffnungs-, Packgutentnahme- und Wiederverschließ-Vorgang kann etwa fünfmal wiederholt werden, wobei jedesmal ein ca. 3 cm breiter Streifen parallel zur Querkante zum Öffnen abgeschnitten und zum Wiederverschließen nach Packgutentnahme jeweils ein ca. 1,5 cm breiter Streifen des offenen Verbindungsbereiches am Verpackungsinnenrand befeuchtet wird.

Die Permeabilitätsmessung an der Gesamtverpackung nach fünf derartigen Vorgängen zum Wiederverschließen ergibt Werte von 10 g/m².d bei 25°C Meßtemperatur.

### Beispiel 2:

Analog zu Beispiel 1 wird ein Laminat aus einer Trägerfolie und einer kaltwasserlöslichen Folie hergestellt und daraus ein Schlauch, wie für Schlauchbeutelpackungen üblich, gebildet.

Als Trägerfolie wird ein Papier-BAK-Folien-Laminat eingesetzt. Diese besteht aus Papier mit einer Papierwichte von 40 g/m² verbunden mittels 3,5 g/m² Polyurethanklebers mit 35µm dicker BAK-Folie. Die BAK-Folie ist eine biologisch vollständig abbaubare Kunststoff-Folie aus linearen Polyestern der Firma WOLFF-WALSRODE.

Als kaltwasserlösliche Folie wird eine Polyvinylalkohol-Stärke-Acetal-Folie (PVACL-Folie), welche durch Blasextrusion aus einem Polyvinylalkohol-Stärke-Acetal-Granulat hergestellt wird, eingesetzt. Das PVACL-Granulat ist zuvor in an sich bekannter Weise durch Reaktionsextrusion in einem Zwei-Schnecken-Extruder aus Polyvinylalkohol mit einem mittleren Molekulargewicht (Gewichtsmittel) von 67.000 und einem Verseifungsgrad von 88 Mol-% hergestellt worden.

Bei der säurekatalysierten Acetalisierungsreaktion wird Essigsäure abgespalten, wodurch der Rest-Acetat-Gehalt des fertigen PVACL-Granulats kleiner 5 Mol-% ist, also einem Verseifungsgrad des Polyvinylalkohol-Molekülanteils - bezogen auf Polyvinylacetat - von 95 Mol% entspricht. Für die Acetalisierungsreaktion wird als Carbonyl-Komponente native Kartoffelstärke eingesetzt, wobei die eingesetzte Menge von 41 Gew-% Stärke, bezogen auf die Summe der Gewichte von Stärke und eingesetztem Polyvinylalkohol, entspricht. Der durch C¹³-NMR-Spektroskopie bestimmte Umsetzungsgrad bei der Acetalisierungsreaktion beträgt nach Neutralisation des Acetalisierungs-Säure-Katalysators mit Natronlauge 95 % der Theorie. Die Stärke wird, ebenfalls durch die Wirkung des sauren Acetalisierungskatalysators, während der Acetalisierungsreaktion abgebaut, so dass das mittlere Molekulargewicht von anfangs 170 Millionen auf 7 Millionen reduziert wird.

Die aus dem vorstehend beschriebenem Laminat hergestellten Schlauchbeutel werden beispielsweise mit Milchpulver befüllt und durch Warm-Querabschweißen gasdicht verschlossen. Die Packungen weisen Sauerstoff-Permeabilitätswerte von unter 100 cm³/(m².d.bar) bei 25°C auf. Die Sauerstoff-Permeabilitätswerte vergleichbarer Polyethylenebeutel liegen bei 1000 - 5000 cm³/(m².d.bar). Die Wasserdampf-Permeabilitätswerte liegen in derselben Größenordnung wie bei Beispiel 1. Im konkreten Fall von Beispiel 2 wird aber besonderes Augenmerk auf die Sauerstoff-Barrierewirkung gelegt, da bei der Lagerung von Milchpulver, insbesondere das Ranzigwerden durch Oxidation der Fett-Inhaltsstoffe des Milchpulvers vermieden werden soll.

Nach jeweils wieder 5 Öffnungs-, Produktentnahme- und Wiederverschliess-Vorgängen in der Weise wie in Beispiel 1 beschrieben, sind die hergestellten Packungen immer noch gasdicht mit einer Sauerstoff-Permeabilität der Gesamtpackung von rund 500 cm³/(m².d.bar).

## Patentansprüche

1. Packung mit einer Hülle aus einem flächigen, faltbaren Verpakkungsmaterial in Formeines Laminates, von welchem zumindestens zwei Randzonen einen Verbindungsbereich zur Ausbildung der Hülle darstellen, dadurch gekennzeichnet, dass das Laminat aus einer kaltwasserlöslichen Folie und einer wasserunlöslichen Trägerfolie besteht, dass die kaltwasserlösliche Folie im wesentlichen aus Polyvinylalkoholen mit Verseifungsgraden von 83 bis 95 Mol.-% oder aus Acetalen von Polyvinylalkoholen mit Verseifungsgraden zur Freisetzung ihrer OH-Gruppen aus Polyvinylacetat von 80 bis 98 Mol.-% acetalisiert mit Stärke zu einem Anteil an acetalisch anreagierter Stärke von bis zu 50 Gew.-% besteht, dass zur Ausbildung der Hülle die Randzonen der Laminatlagen derart angeordnet sind, dass die kaltwasserlöslichen Folien übereinander liegen, so dass durch Verschweißen ein oder mehrere Verbindungsbereiche zum Verschließen der Packung entstehen und dass die Packung nach dem Öffnen durch Befeuchten der kaltwasserlöslichen Folien in den jeweiligen Randzonen wiederverschließbar ist.

2. Packung nach Anspruch 1, dadurch gekennzeichnet, dass die kaltwasserlösliche Folie aus extrudierten Polyvinylalkohol-Preblends besteht, welche neben den Polyvinyl-alkoholen mit Verseifungsgraden von 83 bis 95 Mol.-%, zusätzlich 5 bis 15 Gew.-% Glycerin als Weichmacher, 3 bis 12 Gew.-% Wasser als Coweichmacher, 0,1 bis 1 Gew.-% Antiblockmittel sowie 0 bis 0,3 Gew.-% Stearinsäure aufweisen.

3. Packung nach Anspruch 1, dadurch gekennzeichnet, dass die kaltwasserlösliche Folie aus Polyvinylalkohol-Acetalen hergestellt aus Polyvinylalkoholen mit Verseifungsgraden von 80 bis 98 Mol-%, wobei der Anteil an acetalisch anreagierter Stärke bzw. Stärkederivat mehr als 30 Gew.-% beträgt, besteht.

4. Packung nach Anspruch 1 oder 3, dadurch gekennzeichnet, dass als Stärkederivate native Stärke, wie Kartoffel-, Mais- oder Tapiokastärke eingesetzt werden.

5. Packung nach Anspruch 4, dadurch gekennzeichnet, dass die Stärkederivate als Ethoxylierungs- oder Propoxylierungsprodukte mit maximal 15 Mol.-% Alkoxylierung pro C₆-Einheit der Stärkemoleküle eingesetzt werden.

6. Packung nach Anspruch 1 oder 2, dadurch gekennzeichnet, dass der Anteil an Glycerin-Weichmachern in den Polyvinylalkohol-Preblends 7 bis 12 Gew.-% und der Anteil an Coweichmacher 5 bis 9 Gew.-% betragen.

7. Packung nach Anspruch 6, dadurch gekennzeichnet, dass der Coweichmacher Wasser ist.

8. Packung nach einem der Ansprüche 1 bis 7, dadurch gekennzeichnet, dass die in den kaltwasserlöslichen Folien verwendeten Polyvinylalkohole Verseifungsprodukte von Polyvinylacetat sind, wobei die Molekulargewichtsmittel in einem Bereich von 30.000 bis 200.000 liegen.

9. Packung Anspruch 8, dadurch gekennzeichnet, dass die Verseifungsprodukte ein Molekulargewichtsmittel in einem Bereich von 50.000 bis 100.000 aufweisen.

10. Packung nach einem der Ansprüche 1 bis 9, dadurch gekennzeichnet, dass die Dicke der kaltwasserlöslichen Folie in einem Bereich von 10 bis 50 µm liegt.

11. Packung nach Anspruch 10, dadurch gekennzeichnet, dass die Dicke der kaltwasserlöslichen Folie in einem Bereich von 20 bis 40 µm liegt.

12. Packung nach einem der Ansprüche 1 bis 11, dadurch gekennzeichnet, dass die Packung eine Schlauchbeutelpackung ist, bei welcher die Verbindungsbereiche in Form einer Längsnahtfinne bzw. zwei Quernahtfinnen ausgebildet sind.

13. Verfahren zur Herstellung einer Packung nach einem der Ansprüche 1 bis 12, dadurch gekennzeichnet, dass jeweils zwei Laminatstreifen des Verpackungsmaterials über Transportrollen einander derart zugeführt werden, dass jeweils zwei Randzonen der kaltwasserlöslichen Folie übereinander liegen und dass zumindestens ein Verbindungsbereich zur Ausbildung der Pakkungshülle durch Kalt- oder Warmverschweißen innerhalb der Randzonen der kaltwasserlöslichen Folien ausgebildet wird.
